(19) Europäisches Patentamt
European Patent Office
Office européen des brevets

(11) **EP 3 993 115 A1**

(12) **EUROPEAN PATENT APPLICATION**


(43) Date of publication:
**04.05.2022 Bulletin 2022/18**

(21) Application number: **20205083.7**

(22) Date of filing: **31.10.2020**

(51) International Patent Classification (IPC):
***H01M 8/1044*** *(2016.01)* ***H01M 8/1025*** *(2016.01)*
***B01D 61/00*** *(2006.01)* ***C25C 7/04*** *(2006.01)*
***H01M 8/1027*** *(2016.01)* ***H01M 8/103*** *(2016.01)*
***H01M 8/106*** *(2016.01)* ***H01M 8/1062*** *(2016.01)*
***H01M 8/18*** *(2006.01)*

(52) Cooperative Patent Classification (CPC):
**H01M 8/1044; B01D 71/62; B01D 71/82; C25C 7/04; H01M 8/1025; H01M 8/1027; H01M 8/103; H01M 8/106; H01M 8/1062; H01M 8/188**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**



(71) Applicant: **MANN+HUMMEL LIFE SCIENCES & ENVIRONMENT HOLDING SINGAPORE PTE. LTD.**
**Singapore 609930 (SG)**

(72) Inventors:
- **SCHÜTZ, Steffen**
  **74321 Bietigheim-Bissingen (DE)**
- **ROGHMANS, Florian**
  **52066 Aachen (DE)**
- **KLOZ, Andreas**
  **74343 Kleinsachsenheim (DE)**
- **BENDER, Johannes**
  **71149 Bondorf (DE)**

(74) Representative: **Maiwald Patent- und Rechtsanwaltsgesellschaft mbH**
**Elisenhof**
**Elisenstraße 3**
**80335 München (DE)**


(54) **ACID-BASE POLYMER BLEND MEMBRANES**


(57) The present disclosure relates to an acid-base polymer blend membrane comprising at least one first polymer exhibiting acidic groups (A) and at least one second polymer exhibiting basic groups (B), wherein the molar ratio of acidic groups A / basic groups B in the acid-base polymer blend membrane is at least 1 / 0.25. Furthermore, the present disclosure relates to a cell membrane comprising a support structure and an acid-base polymer blend membrane, wherein the acid-base polymer blend membrane is impregnated on the support structure. Said cell membrane can be used in an electrodialysis cell, in a fuel cell, in a PEM electrolyzer, or in a redox flow battery, preferably in a redox flow battery.


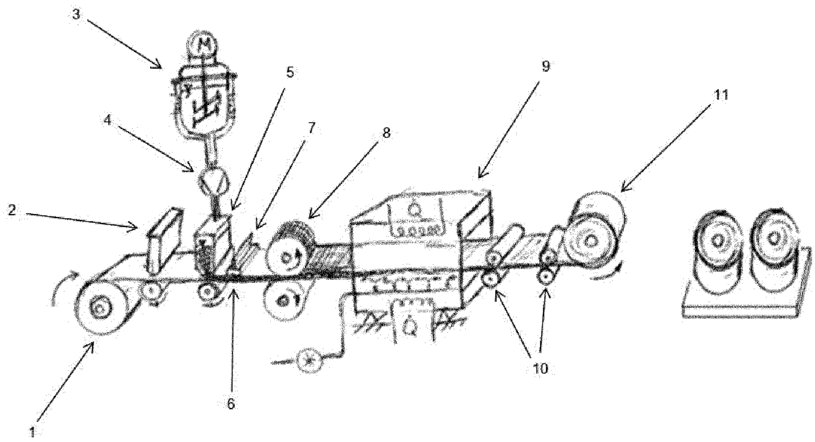


Fig. 1

EP 3 993 115 A1

## Description

Field of the invention

The present application relates to an acid-base polymer blend membrane, a cell membrane comprising the acid-base polymer blend membrane, the use thereof, and a device comprising the cell membrane.

BACKGROUND OF THE INVENTION

Different approaches and scenarios are being pursued to meet the global energy demand, which will grow even more in the future with the introduction of e-mobility. A great potential is attributed to renewable energy sources, such as wind and solar energy. However, a major disadvantage of non-fossil energy sources is that they are only available temporarily, and energy storage systems which can temporarily store the excess energy and release it as requested, are needed. This surplus energy can be stored in large reservoirs, for example, but this requires a lot of space. Another way to store energy is to convert the available energy into electrical energy, which is then stored in accumulators or batteries. Today's Li-ion based batteries offer an excellent ratio of power or capacity to space requirements. However, the extraction of lithium as a raw material brings about a lot of disadvantages, which - among other things - cannot be reconciled with sustainability and environmental protection.

Another possibility to store the gained energy efficiently and in a space-saving manner is the use of redox-flow batteries. This is a type of accumulator in which the electrical energy is stored in chemical compounds. These chemical compounds are present as reaction partners in a solvent in dissolved form and circulate as electrolytes in two separate circuits, between which the ion exchange takes place through a membrane. The dissolved substances are chemically reduced or oxidized, releasing or storing electrical energy. The redox flow battery is a form of galvanic cell in which a conversion of chemical into electrical energy can take place in a reversible process. Since the two electrolytes are stored in two separate tanks, the amount of stored energy does not depend on the cell size, but only on the size of the electrolyte tanks.

Among the redox-flow batteries in use today, two types of technical designs can be distinguished in particular, which differ in the chemistry of the electrolytes or redox pairs used. On the one hand, there are redox-flow batteries with metal-based electrolytes, such as electrolytes based on iron and, in particular, vanadium in different oxidation states. On the other hand, also compounds based on organic substances such as lignin, lignin-based (e.g., quinone) or lignin sulfonate solutions are used. While the vanadium-based electrolytes are potentially harmful to health and environment due to their heavy metal toxicity, the organic based electrolytes are a promising alternative since the materials required for electrolyte production may be taken from renewable raw materials, and they are - in principle - available in unlimited quantities.

A core component of the redox flow battery is the cell membrane. The main tasks of the cell membrane are the separation of the two positively and negatively charged electrolytes and the selective conduction of cations through the membrane, which is necessary for the conduction of electrons via the external circuit. In addition to good electrochemical properties, such as high ionic conductivity and low electrical resistance, the cell membrane should have excellent mechanical and chemical stability, as well as low water absorption and swelling behaviour. Furthermore, the cell membrane should have good processing properties, such as handling and connectivity with other materials by welding or bonding. Finally, the redox flow batteries with the above mentioned membranes should show a high cycle stability, high energy efficiency, and high Coulomb efficiency of the whole system.

Cell membranes for, e.g., fuel cells, PEM electrolysis and redox flow batteries (RFBs) have therefore been, and are still being, wildly explored.

Membranes for fuel cells, PEM electrolysis and redox flow batteries comprising halogen containing polymers, in particular polymers containing fluorine, are currently widely used. However, similar as with vanadium based electrolytes, also halogen containing compounds are considered potentially harmful to the environment.

SUMMARY OF THE INVENTION

Thus, there is still a need for halogen-free ion exchange membranes which are more cost-effective and environmentally friendly. There is still a need for ion exchange membranes characterized by lower electrical resistance and thus higher ion conductivity, in particular in strongly basic electrolytes, such as lignin-based electrolytes, or also strongly acidic electrolytes. There is still a need for lower electrolyte crossover during charging or discharging in batteries, such redox flow batteries (RFBs). There is still a need for high discharging capacity in battery cells. There is still a need for good processability through welding or gluing, in particular in combination with a substrate made from the same raw material as the components to be welded.

It is one object of the present disclosure to provide a halogen-free ion exchange membrane having a low

electrical resistance, in particular in strongly basic electrolytes, such as lignin-based electrolytes, or also strongly acidic electrolytes, which may advantageously be used in different applications, including RFBs.

In a first aspect, the present disclosure provides an acid-base polymer blend membrane comprising at least one first polymer exhibiting acidic groups (A) and at least one second polymer exhibiting basic groups (B), wherein the molar ratio of acidic groups A / basic groups B in the acid-base polymer blend membrane is at least 1 / 0.25.

In a second aspect, the present disclosure provides a cell membrane comprising a support structure and an acid-base polymer blend membrane according to the first aspect, wherein the acid-base polymer blend membrane is impregnated on the support structure.

In a third aspect, the present disclosure provides a use of the acid-base polymer blend membrane according to the first aspect, or of the cell membrane according to the second aspect in an electrodialysis cell, in a fuel cell, in a PEM electrolyzer, or in a redox flow battery, preferably in a redox flow battery.

In a fourth aspect, the present disclosure provides a device comprising an acid-base polymer blend membrane according to the first aspect, or a cell membrane according to the second aspect, wherein the device is an electrodialysis cell, a fuel cell, a PEM electrolyzer, or a redox flow battery, preferably a redox flow battery.

The present invention will be described with respect to particular embodiments and with reference to certain examples, but the invention is not limited thereto, and it is only defined by the appending claims.

BRIEF DESCRIPTION OF FIGURES

Fig. 1 Schematic drawing of the apparatus for impregnating a substrate with a polymer blend membrane in accordance with the present disclosure.

Fig. 2 Schematic drawing of a substrate impregnated with a polymer blend membrane in accordance with the present disclosure.

DETAILED DESCRIPTION OF THE INVENTION

In a first aspect, the present disclosure relates to an acid-base polymer blend membrane comprising at least one first polymer exhibiting acidic groups (A) and at least one second polymer exhibiting basic groups (B), wherein the molar ratio of acidic groups A / basic groups B in the acid-base polymer blend membrane is at least 1 / 0.25.

The inventors of the present disclosure have surprisingly found that a high molar ratio of acidic groups to basic groups in the acid-base polymer blend membrane of the present disclosure show good electrical properties, with low electrical resistance and high ion conductivity.

In a preferred embodiment of the first aspect, an acid-base polymer blend membrane is provided, wherein the acidic group of the first polymer is selected from the group consisting of $-SO_3H$, $-PO_3H$, $-PO_3H_2$, -COOH, $-AsO_3H$, $-SeO_3H$ and/or $-C_6H_4OH$, preferably wherein the acidic group is $-SO_3H$.

In a preferred embodiment of the first aspect, an acid-base polymer blend membrane is provided, wherein the basic group of the second polymer is selected from the group consisting of pyridine, triazole, benzotriazole, pyrazol, benzpyrazol, imidazole, and benzimidazole, preferably wherein the basic group is imidazole or benzimidazole, further preferably benzimidazole.

In a preferred embodiment of the first aspect, an acid-base polymer blend membrane is provided, wherein the at least one first polymer is selected from the group consisting of sulfonated poly(arylene ether sulfone) (sPAES), sulfonated poly(ether ether ketone) (sPEEK), and sulfonated poly (ether ketone) (sPEK), preferably wherein the at least one first polymer is selected from the group consisting of sulfonated polyphenylsulfone (sPPSU), sulfonated poly(ether ether ketone) (sPEEK), and sulfonated poly (ether ketone) (sPEK), and further preferably wherein the at least one first polymer is sulfonated poly(ether ether ketone) (sPEEK).

In a preferred embodiment of the first aspect, an acid-base polymer blend membrane is provided, wherein the at least one second polymer is selected from the group consisting of meta-polybenzimidazole (m-PBI), and polybenzimidazole-OO (PBI-OO), and preferably wherein the at least one second polymer is meta-polybenzimidazole (m-PBI).

In a preferred embodiment of the first aspect, an acid-base polymer blend membrane is provided, wherein the molar ratio of acidic groups A / basic groups B in the acid-base polymer blend membrane is at least 1 / 0.24, or at least 1 / 0.23, or at least 1 / 0.22, or at least 1 / 0.21, or at least 1 / 0.20, or at least 1 / 0.19, or at least 1 / 0.18, or at least 1 / 0.17, or at least 1 / 0.16, or at least 1 / 0.15, or at least 1 / 0.14, or at least 1 / 0.13, or at least 1 / 0.12, or at least 1 / 0.11, or at least 1 / 0.10, or at least 1 / 0.09; preferably wherein the molar ratio is at least 1 / 0.21, or at least 1 / 0.20, or at least 1 / 0.15, or at least 1 / 0.14, or at least 1 / 0.10, or at least 1 / 0.09.

In a preferred embodiment of the first aspect, an acid-base polymer blend membrane is provided, wherein the

molar ratio of acidic groups A / basic groups B in the acid-base polymer blend membrane is 1 / 0.07 or less, or 1 / 0.08 or less, or 1 / 0.09 or less, or 1 / 0.10 or less, or 1 / 0.11 or less, or 1 / 0.12 or less, or 1 / 0.13 or less, or 1 / 0.14 or less, or 1 / 0.15 or less, or 1 / 0.16 or less, or 1 / 0.17 or less, or 1 / 0.18 or less, or 1 / 0.19 or less, or 1 / 0.20 or less, or 1 / 0.21 or less, or 1 / 0.22 or less, or 1 / 0.23 or less; preferably wherein the molar ratio is 1 / 0.07 or less, or 1 / 0.08 or less, or 1 / 0.12 or less, 1 / 0.13 or less, or 1 / 0.18 or less, or 1 / 0.19 or less.

In a preferred embodiment of the first aspect, an acid-base polymer blend membrane is provided, wherein the molar ratio of acidic groups A / basic groups B in the membrane is in the range of from 1 / 0.25 to 1 / 0.07, or from 1 / 0.20 to 1 / 0.08, or from 1 / 0.20 to 1 / 0.13, or from 1 / 0.20 to 1 / 0.19, or from 1 / 0.14 to 1 / 0.08, or from 1 / 0.14 to 1 / 0.13, or from 1 / 0.09 to 1 / 0.08.

In a second aspect, the present disclosure provides a cell membrane comprising a support structure and an acid-base polymer blend membrane according to the first aspect, wherein the acid-base polymer blend membrane is impregnated on the support structure.

In a preferred embodiment of the second aspect, a cell membrane is provided, wherein the support structure is a woven or nonwoven fabric, preferably wherein the fabric comprises a polymer selected from the group consisting of polyethylene (PE), polypropylene (PP), polyamide (PA), polysulfone (PSU), polyether ether ketone (PEEK), polyether ketone (PEK), polyvinylidene fluoride (PVDF), polyethersulfone (PES), polyetherimide (PEI), polybenzimidazole (PBI), polyethylene terephthalate (PET), polyester and polyphenylene oxide (PPO); or wherein the fabric comprises glass fibers, further preferably wherein the fabric comprises a polymer selected from the group consisting of polyethylene (PE), polypropylene (PP), polyamide (PA), polysulfone (PSU), polyether ether ketone (PEEK), polyether ketone (PEK), polyethylene terephthalate (PET), and polyester, or wherein the fabric comprises a polymer selected from the group consisting of polyethylene (PE), polypropylene (PP), and polyester.

In a preferred embodiment of the second aspect, a cell membrane is provided, wherein the support structure, preferably the nonwoven fabric, has a thickness in the range of from 1 to 250 μm, preferably of from 1 to 200 μm, or from 2 to 200 μm, or from 5 to 100 μm, or from 10 to 200 μm, or from 50 to 100 μm, or from 5 to 50 μm, or from 20 to 50 μm, or preferably in the range of from 1 to 60 μm, or from 10 to 50 μm, or from 1 to 25 μm, or from 2 to 20 μm.

In a preferred embodiment of the second aspect, a cell membrane is provided, wherein the support structure is impregnated with the acid-base polymer blend membrane on one side of the support structure, or wherein the entire support structure is impregnated with the acid-base polymer blend membrane.

In a preferred embodiment of the second aspect, a cell membrane is provided, wherein the support structure is impregnated with the acid-base polymer blend membrane, and wherein the impregnated support structure has a thickness in the range of from 1 μm to 400 μm, preferably of from 10 to 100 μm, or from 50 to 100 μm, or from 20 to 50 μm.

In a third aspect, the present disclosure provides a use of the acid-base polymer blend membrane according to the first aspect, or of the cell membrane according to the second aspect in an electrodialysis cell, in a fuel cell, in a PEM electrolyzer, or in a redox flow battery, preferably in a redox flow battery.

In a fourth aspect, the present disclosure provides a device comprising an acid-base polymer blend membrane according to the first aspect, or a cell membrane according to the second aspect, wherein the device is an electrodialysis cell, a fuel cell, a PEM electrolyzer, or a redox flow battery, preferably a redox flow battery.

## Definitions

Terms as set forth hereinafter are generally to be understood in their common sense unless indicated otherwise.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless specifically stated otherwise.

Terms like "obtainable" and "obtained" are used interchangeably. This, e.g., means that, unless the context clearly dictates otherwise, the term "obtained" does not mean to indicate that e.g. an embodiment must be obtained by e.g. the sequence of steps following the term "obtained" even though such a limited understanding is always included by the terms "obtained" as a preferred embodiment.

The membranes of the present disclosure are mainly or exclusively composed of polymers. These polymers may exhibit acidic or basic functionality.

As used herein, a "basic polymer" or "polymeric base" refers to a polymer with at least one basic group per repeating unit.

As used herein, an "acidic polymer" or "polymeric acid" refers to a polymer with at least one acidic group per repeating unit. In a preferred embodiment, said acidic group A is a sulfone group.

In a sulfonated polymer, the amount of sulfonation is expressed by the term "degree of sulfonation" or "DS",

relating to the degree to which a polymer is sulfonated. The term DS is a preferred embodiment of the generic term "DA" or "degree of acidity". The term DA is hence exchangeable with DS in case the acidic group of the acidic polymer is a sulfonate group, $-SO_3H$.

The degree of sulfonation is defined relative to the repeating unit of the polymer. For example, acidic polymer **A2** (as used in the Examples below) is a sulfonated PEEK polymer (sPEEK) with a repeating unit comprising three phenyl groups. If each repeating unit in said PEEK polymer is sulfonated with one sulfone group, the degree of sulfonation is defined as 100 %. In other words, if the degree of sulfonation is, e.g., 50 %, every second repeating unit is sulfonated. It is understood that also a DS of above 100 % is possible if each repeating unit is, on average, substituted with more than one sulfone group.

Taking acidic polymer **A2** with a DS of 60 %, it refers to a mixture of 60% of sulfonated PEEK repeating units and 40% of non-sulfonated PEEK repeating units. The degree of sulfonation cannot be entirely determined by experimental measures to the extent that every sulfonation reaction yields the same DS, despite identical reaction conditions. Rather, performing the same sulfonation reaction of the same starting material, e.g. PEEK, a different DS may be determined. The determination of the degree of sulfonation may be performed by means of GC analysis or $^1H$ NMR spectroscopy, as it is known to the skilled person. The DA, and specifically the DS, thus is determined by analytical means after sulfonation.

With the knowledge of DA, or specifically DS, the molar amount of acidic groups ($n_{acidic\ groups}$) in the polymer exhibiting acidic groups used in the acid-base polymer blend may be determined. And, in an analogous manner, also the amount of basic functionality ($n_{basic\ groups}$) may be determined for the basic polymer. Both amounts may be used to calculate the A / B molar ratio.

Herein, the term "A / B molar ratio" or "acidic group A / basic group B molar ratio" refers to a calculated molar ratio of acidic groups to basic groups in an ion exchange polymer blend membrane according to the present disclosure. For example, an A / B molar ratio of 1 / 0.2 relates to an acid-base polymer blend membrane, wherein the number of acidic groups are five times higher than the number of basic groups. In the case of **A2-B1** with an A / B molar ratio of 1 / 0.2, an acid-base polymer blend membrane is referred to, wherein the number of sulfonate groups are five times higher than the number of benzimidazole moieties. The A / B molar ratio may be generally calculated as follow:

$$A/B = \frac{n_{acidic\ groups}}{n_{basic\ groups}}$$

If a polymer exhibits acidic functionality, said functionality may be, e.g., provided by a chemical group selected from the group consisting of $-SO_3H$ (sulfonate group), $-PO_3H$ (phosphite group), $-PO_3H_2$ (phosphonate group), -COOH (carboxyl group), $-AsO_3H$ (arsonate group), $-SeO_3H$ (selenoic group) and $-C_6H_4OH$ (phenol group). Any of these groups provide acidic functionality. The total molar amount of acidic functionality in the polymer is summarized for the calculation of the molar ratio of acidic and basic functionality.

If a polymer exhibits basic functionality, said functionality may be, e.g., provided by a nitrogen containing group, such as a nitrogen in a group selected from the group consisting of pyridine, triazole, benzotriazole, pyrazol, benzpyrazol, imidazole, and benzimidazole. The total molar amount of basic functionality in the polymer is summarized for the calculation of the molar ratio of acidic and basic functionality.

The term "lignin-based electrolyte" as used herein refers to a redox pair of lignin-derived molecules, such as quinone, and derivatives thereof.

## Polymers

The present disclosure relates to an acid-base polymer blend membrane. The membrane is thus composed of a blend of at least two different polymers, namely a first polymer exhibiting acid groups A, and a second polymer exhibiting basic groups B. The core of the polymer is a blend of two polymers with different functionality, one providing acidic, the other providing basic functionality. With this core in mind, it is understood that for each functionality, also more than one polymer may be used, i.e., a mixture of at least two polymers both providing acidic functionality, and / or a mixture of at least two polymers both providing basic functionality. Such mixtures may allow for a further tailoring of the acidic or basic properties of the polymer blend.

### *Polymers exhibiting acidic groups*

The first polymer used in the polymer blend is a polymer exhibiting acidic groups. Such polymer is also referred to herein as "acidic polymer".

In a preferred embodiment, the acidic group of the first polymer is selected from the group consisting of $-SO_3H$, $-PO_3H$, $-PO_3H_2$, -COOH, $-AsO_3H$, $-SeO_3H$ and/or $-C_6H_4OH$.

In a further preferred embodiment, the acidic group is $-SO_3H$.

However, it is understood that also more than one of the different acidic groups may be present in a single polymer.

In a preferred embodiment, the polymer exhibiting an acidic group makes use of only one acidic group, not exhibiting different acidic groups, in particular from the groups as listed above. Thus, in addition to a mixture of different polymers each exhibiting a different acidic group, different acidic groups may also be provided within a single polymer.

Thus, in one embodiment, the at least one first polymer exhibiting acidic groups is a polymer exhibiting at least one sulfonate group ($-SO_3H$), at least one phosphite group ($-PO_3H$), at least one phosphonate group ($-PO_3H_2$), at least one carboxyl group (-COOH), at least one arsonate group ($-AsO_3H$), at least one selenoic group ($-SeO_3H$) and/or at least one phenol group ($-C_6H_4OH$) per repeating unit.

The acidic polymer may be prepared from a polymer not exhibiting acidic groups by introducing said acidic groups. Acidic groups may be introduced by known measures. For instance, a sulfonate group may be introduced into a polymer by sulfonation, e.g., using concentrated sulfuric acid or oleum. Alternatively, the polymer may be prepared using monomers exhibiting the desired acidic group.

The degree of acidity may be influenced by process parameters when introducing the acidic group to the polymer, or by using a mixture of monomers wherein one type of monomer is not exhibiting an acidic group ("non-acidic monomer"), and another type of monomer exhibits an acidic group ("acidic monomer"). By varying the ratio of acidic monomer to non-acidic monomer, the DA may be influenced. It is understood that monomers may also exhibit more than one acidic group, and mixtures of non-acidic monomer, acidic monomer and acidic monomer with two or more acidic groups may also be used to vary the degree of acidity.

In a preferred embodiment, the backbone polymer, i.e., the polymer not exhibiting an acidic group, may be selected from poly(arylene ether sulfone) (PAES), poly(ether ether ketone) (PEEK), and poly (ether ketone) (PEK). A preferred embodiment of PAES is polyphenylsulfone (PPSU).

A particularly preferred acidic group is the sulfone group (-SO3H). The degree of acidity in a sulfonated polymer is expressed as degree of sulfonation (DS). As already outlined above, the sulfonated polymer may be prepared by direct sulfonation of a backbone polymer, or by (co-)polymerization using monomers having at least one sulfone group.

Thus, a preferred embodiment of the present disclosure relates to the use of sulfonated poly(arylene ether sulfone) (sPAES), sulfonated poly(ether ether ketone) (sPEEK), and sulfonated poly(ether ketone) (sPEK) as the at least one first polymer.

In a further preferred embodiment, the at least one first polymer is selected from the group consisting of sulfonated polyphenylsulfone (sPPSU), sulfonated poly(ether ether ketone) (sPEEK), and sulfonated poly(ether ketone) (sPEK), with the sulfonated poly(ether ether ketone) (sPEEK) being further preferred.

In a preferred embodiment, sPAES is sulfonated polyphenylsulfone (sPPSU) having the following structural representation:

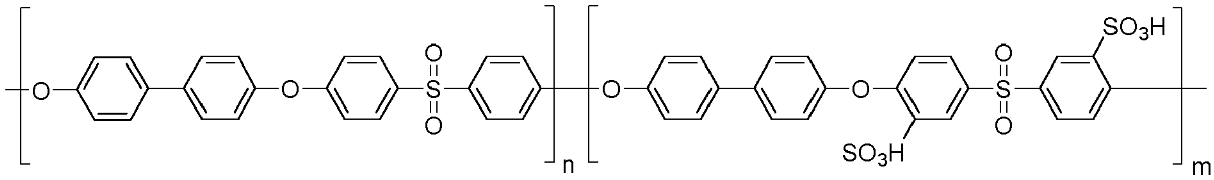

sPPSU

The polymer sPPSU may be obtained by copolymerization of a monomer bearing two sulfonate groups and a monomer bearing no sulfonate group. The DS of sPPSU is calculated on the basis of the ratio of n and m, i.e., the ratio of the un-sulfonated monomer (in the amount of n) and the double-sulfonated monomer (in the amount of m). As an exemplary calculation, if the ratio of n and m is 1, i.e. both monomers are used in equal amounts, the degree of sulfonation is 50% with - on average - one sulfone group per monomer.

In another preferred embodiment, the at least one first polymer exhibiting acidic groups A is sPEEK.

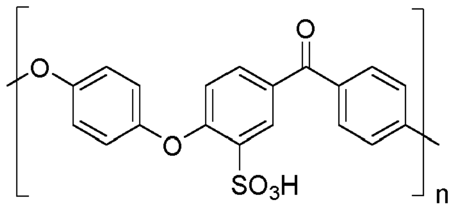

sPEEK

sPEEK may be obtained by the direct sulfonation of PEEK.

In a preferred embodiment, the DS of sPEEK is at least 30 %, or at least 40 %, or at least 50 %, or at least 60 %, or at least 70 %, or at least 80 %, or at least 90 %. In a more preferred embodiment, the DS of sPEEK is at least 50 %, or at least 60 %, or at least 70 %.

In another preferred embodiment, the DS of sPEEK is 90 % or less, or 80 % or less, or 70 % or less, or 60 % or less, or 50 % or less, or 40 % or less, preferably 70 % or less, or 60 % or less.

In another preferred embodiment, the at least one first polymer exhibiting acidic groups is sPEK.

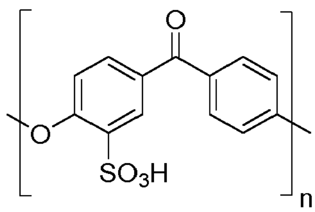

sPEK

sPEK may be obtained by the direct sulfonation of PEK.

In a preferred embodiment, the DS of sPEK is at least 30 %, or at least 40 %, or at least 50 %, or at least 60 %, or at least 70 %, or at least 80 %, or at least 90 %. In a more preferred embodiment, the DS of sPEK is at least 30 %, or at least 40 %, or at least 50 %.

In another preferred embodiment, the DS of sPEK is 90 % or less, or 80 % or less, or 70 % or less, or 60 % or less, or 50 % or less, or 40 % or less, preferably 60 % or less, or 50 % or less, or 40 % or less.

*Polymers exhibiting basic groups*

The second polymer used in the polymer blend is a polymer exhibiting basic groups. Such polymer is also referred to herein as "basic polymer".

In a preferred embodiment, the basic group of the second polymer is selected from the group consisting of pyridine, triazole, benzotriazole, pyrazol, benzpyrazol, imidazole, and benzimidazole. Said group may be part of the polymer backbone, or present as a substituent to the polymer backbone.

In a preferred embodiment, the basic group is part of the polymer backbone.

In another preferred embodiment, the basic group is imidazole or benzimidazole, further preferably benzimidazole.

In still another preferred embodiment, only a single basic group is present in the second polymer. However, it is understood that also more than one of the different basic groups may be present in a single polymer.

Similar as the degree of acidity outlined for the first polymer above, a degree of basicity may be determined for the second polymer. Reference is made to the explanations above, which apply *mutatis mutandis.*

In another embodiment, the at least one second polymer exhibiting basic groups is meta-polybenzimidazole (m-PBI), or polybenzimidazole-OO (PBI-OO), with m-PBI being further preferred.

m-PBI exhibits one repeating unit, wherein each repeating unit bears two basic benzimidazole groups:

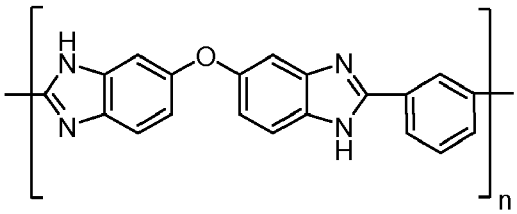

m-PBI

In another embodiment, the at least one second polymer exhibiting basic groups is PBI-OO. PBI-OO exhibits one repeating unit, wherein each repeating unit bears two basic benzimidazole groups:

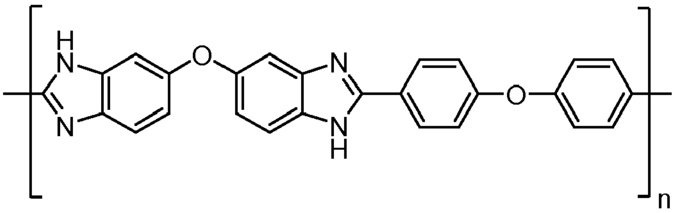

PBI-OO

*Polymer blend*

In the acid-base polymer blend membrane of the present disclosure, at least one first polymer exhibiting acidic groups and at least one second polymer exhibiting basic groups are present. As already outlined above, it is understood that more than two polymers, and in particular more than two polymers exhibiting acid and / or basic groups may be present.

In one embodiment, an acid-base polymer blend membrane according to the present disclosure comprises a polymer bearing a sulfonate group (-$SO_3H$) as acidic group, and a polymer bearing at least one benzimidazole group as basic group.

In another preferred embodiment, an acid-base polymer blend membrane according to the present disclosure comprises an acidic polymer selected from the group consisting of sPPSU, sPEEK, and sPEK, and a basic polymer selected from the group consisting of m-PBI and PBI-OO, preferably m-PBI.

In a more preferred embodiment, an acid-base polymer blend membrane according to the present disclosure comprises the acidic polymer sPPSU and the basic polymer m-PBI.

In another more preferred embodiment, an acid-base polymer blend membrane according to the present disclosure comprises the acidic polymer sPEEK and the basic polymer m-PBI.

In yet another preferred embodiment, an acid-base polymer blend membrane according to the present disclosure comprises the acidic polymer sPEK and the basic polymer m-PBI.

*Polymer blend solution*

The polymer blend membrane of the present disclosure is preferably supported on a support structure. For application of the polymer blend membrane to a support structure, the polymers may be dissolved in a solvent.

Suitable solvents for the preparation of a polymer blend solution are aprotic / polar solvents, in particular N,N-dimethylacetamide (DMAc), dimethyl sulfoxide (DMSO), or N-methyl-2-pyrrolidone (NMP). Another suitable solvent is dimethylformamid (DMF).

The respective polymers may be dissolved in the solvents at a corresponding concentration. The concentration of the polymer in the solution may be in the range of from 1 to 30 wt.-%, preferably 3 to 20 wt.-%, further preferably 5 to 10 wt.-%.

The polymers may be dissolved in the solvent by stirring the solvent and the polymer for several hours, such as for 2 to 20 hours. Additionally, the polymer may be dissolved in the solvent at elevated temperatures, such as at 50 to 150 °C. After preparation of the solution, it may additionally be filtered to remove excess polymer which was not dissolved.

It is preferred to prepare two separate solutions for the acidic polymer and the basic polymer, respectively. These two separate solutions may then be combined to form a single solution for application to the substrate. Optionally, the acidic solution may be deprotonated, e.g. using triethyl amine (TEA), diethyl amine (DEA) or n-propyl amine.

It is understood that the solvent may not fully dissolve the polymers, resulting in a solution, which may also be termed as stable suspension. For ease, the solution or stable suspension of the polymer is termed solution herein.

Cell membrane preparation

The cell membrane is composed of a support structure impregnated with the acid-base polymer blend membrane as disclosed herein.

*Support structure*

According to a preferred embodiment, the support structure is a woven or nonwoven fabric. Both are commonly referred to as fabric in the following.

In one embodiment, the woven fabric may be a 2D woven fabric, such as a square mesh fabric, or a 3D woven fabric, such as a braid fabric.

In an alternative embodiment, the support structure is a nonwoven fabric (fleece). For economic reasons, the use of a nonwoven fabric is preferred.

As just outlined, the support structure is preferably a woven or nonwoven fabric, with a nonwoven fabric being further preferred. In a further preferred embodiment, the woven or nonwoven fabric comprises a polymer selected from the group consisting of polyethylene (PE), polypropylene (PP), polyamide (PA), polysulfone (PSU), poly(ether ether ketone) (PEEK), poly(ether ketone) (PEK), polyvinylidene fluoride (PVDF), polyethersulfone (PES), polyetherimide (PEI), polybenzimidazole (PBI), polyethylene terephthalate (PET), polyester and polyphenylene oxide (PPO).

According to a still further preferred embodiment, the woven or nonwoven fabric, preferably the nonwoven fabric, comprises a polymer selected from the group consisting of polyethylene (PE), polypropylene (PP), polyamide (PA), polysulfone (PSU), poly(ether ether ketone) (PEEK), poly(ether ketone) (PEK), polyethylene terephthalate (PET), and polyester.

According to another preferred embodiment, the woven or nonwoven fabric, preferably the nonwoven fabric, comprises a polymer selected from the group consisting of polyethylene (PE), polypropylene (PP), and polyester.

In general, the support structure, preferably the nonwoven fabric, may have a thickness in the range of from 1 to 250 μm, preferably of from 1 to 200 μm, or from 2 to 200 μm, or from 5 to 100 μm, or from 10 to 200 μm, or from 50 to 100 μm, or from 5 to 50 μm, or from 20 to 50 μm, or preferably in the range of from 1 to 60 μm, or from 10 to 50 μm, or from 1 to 25 μm, or from 2 to 20 μm. If the thickness of the support structure is too low, it becomes more difficult to coat the support structure in an appropriate manner with the polymer blend solution to achieve a satisfactory polymer blend film for use as membrane. On the other hand, if the support structure is too thick, it becomes uneconomic. Also a thick support structure is more difficult to entirely coat throughout the thickness of the support structure.

The nonwoven fabric for use in the support substrate of the cell membrane according to the present disclosure may be prepared by melt-blowing processes or prepared by wet-laid technologies, optionally including a calibration using known calendar processes. The nonwoven fabric may optionally have a gradient structure, or it may be homogenous.

For use in accordance with the present disclosure, the fabric may have a thickness in the range of from 1 to 250 μm, preferably of from 1 to 200 μm, or from 2 to 200 μm, or from 5 to 100 μm, or from 10 to 200 μm, or from 50 to 100 μm, or from 5 to 50 μm, or from 20 to 50 μm, or preferably in the range of from 1 to 60 μm, or from 10 to 50 μm, or from 1 to 25 μm, or from 2 to 20 μm. The mean fiber diameter may be in the range of from 1 to 50 μm, preferably from 1 to 25 μm, or from 2 to 20 μm.

*Impregnation of support structure*

An exemplary process for the preparation of a nonwoven fabric impregnated with an acid-base polymer blend membrane according to the present disclosure is described in a non-limiting manner in the following with reference to Fig. 1. It is understood that a similar or identical process may also be applied to and used for a woven fabric.

A nonwoven fabric (1) as substrate is provided as rolled good. For coupling activation, the nonwoven fabric (1) is treated with a plasma in a plasma treating apparatus (2). The polymer blend solution is provided in a batch reactor (3) under constant stirring to avoid precipitation and maintain a constant concentration of the polymer blend solution. With a pump (4), the solution is provided to a slot die or doctor blade assembly (5) where the polymer blend solution is applied to the nonwoven fabric (6). In an alternative method (not shown in Fig. 1), the support structure may be fully impregnated, e.g., in a bath of polymer solution. The nonwoven fabric may then optionally be passed through a calibrating unit (7) where the membrane polymer is calibrated and a defined thickness of the acid-base polymer blend membrane may be adjusted. In an optional step, a pair of structure embossing rollers (8) may further calibrate the membrane. In a drying unit (9), energy is applied to the impregnated nonwoven fabric, e.g., via hot air or infrared radiation, such as a floating dryer, for evaporation of solvent, which may be recovered and recycled. By evaporation of the solvent, the solid

polymer blend membrane is formed, and the acid and basic polymer components are linked to each other. The impregnated and dried nonwoven fabric is then processed by conveyor rollers (10) and rolled to result in the final cell membrane as rolled good for storage and further use.

According to one embodiment, the cell membrane can be a partially impregnated with the acid-base polymer blend solution, resulting in a polymer blend membrane being present as a functional polymer film / ion exchange membrane on one side of the fabric support structure.

As exemplarily shown in Fig. 2, a nonwoven fabric support structure (21) is impregnated with a polymer blend solution such that a functional polymer film (21) is formed on one side of the support structure, providing the ion exchange membrane. The thickness of the support structure (23) may, e.g., be in the range of from 5 to 100 μm, and the thickness of polymer film (24) on the support structure may be in the range of from 1 to 50 μm.

According to another embodiment, the cell membrane can be a fully impregnated with the acid-base polymer blend solution, resulting in a polymer blend membrane being present as a functional polymer film / ion exchange membrane on both sides of and throughout the fabric support structure. Both sides of the support structure are thus fully covered in a closed manner with an acid-base polymer blend membrane in the form of a film. In particular, if the absorptive capacity or the absorption kinetic of the fabric is low, coating on both sides and throughout the fabric may be advantageous.

In general, the thickness of the polymer blend membrane ("polymer membrane") within and on top of the support structure, i.e. the woven or nonwoven fabric, preferably the nonwoven fabric, may be in the range of from 10 to 100 μm, preferably from 10 to 50 μm, or from 15 to 30 μm, or from 17 to 25 μm. The thickness of the cell membrane ("reinforced polymeric membrane") for use in RFBs is usually preferably in the range of from 10 to 100 μm, while the thickness for other applications may be rather in the range of from 10 to 400 μm. It is preferred that the polymer blend membrane extends mainly into the support structure, but forming a smooth and closed surface on one or both sides of the support structure. Said smooth and closed surface may extend above and / or below the surface of the support structure, essentially sealing the support surface with the polymer blend membrane.

The acid-base polymer blend membrane fully covers the area of the support structure, providing a closed membrane. This is achieved by fully or essentially fully coating the fibers of the fabric support structure. The adherence of the acid-base polymer blend membrane may be increased by a plasma treatment of the fabric support structure, or, in an alternative or additional measure, by the use of a bonding or coupling agent. In particular for use in, e.g., a redox flow battery, the provision of a closed membrane is important. The impregnated polymer film should be a film without holes, bubbles, or other kinds of interruptions so that a defect free ion conduction through the membrane is provided for. Incorporations of gas, such as air, or holes in the polymer are disadvantageous, but may occur if the support material is not well coated or wetted by the polymer blend solution. In addition, holes in the polymer blend membrane may allow for the electrolytes to be mixed, resulting in a "cross-over", which leads to an internal discharge of the battery, without providing an electrical current.

The cell membranes of the present disclosure, i.e., the impregnated fabric, may be further processed into suitable arrangements for use in a electrodialysis cell, a fuel cell, in a PEM electrolyzer, or a redox flow battery, preferably in a redox flow battery. Such processing may include the fixation of a cell membrane in a frame, such as a frame made of a polymeric material. The fixation may be achieved by welding or gluing, using appropriate adhesives. However, it is preferred to weld the cell membrane to frames, which may then also be arranged to stacks. When the cell membrane is welded, e.g., to a frame, the fabric support structure may be used for welding.

The cell membranes of the present disclosure have the advantage of halogen free starting materials, leading to halogen free materials. The cell membranes show low electric resistance and high ion conducting capacity, in particular in strongly basic electrolytes, such as quinone based organic electrolytes, or in strongly acidic electrolytes. The materials are very resistant to harsh conditions, such as strongly basic or acidic environments, or increased temperature during processing due to heat generated by the internal resistance in RFBs, in particular in hot areas, where temperatures in the RFB of as much as, e.g., 60 °C or even 80 °C may be reached. Also the electrolyte crossover is very low, and, if used in batteries, the discharge capacities are high.

The cell membranes may also be produced in a cheap manner due to the use of a support structure which is widely available at low cost. Furthermore, the use of a support structure allows for the preparation of acid-base polymer blend membranes having a very low thickness, such as 10 μm or below, showing a low electric resistance, compared to thicker commercially available polymer membranes, which have a thickness of, e.g., 50 μm. With the ability to prepare thin membranes, this may also add to reduced costs and reduced environmental burden due to reduced amount of polymer material used for the membranes.

## EXPERIMENTAL SECTION

In the following, the present invention is illustrated in more detail by way of examples. However, it is understood that the scope of protection is only determined by the attached claims, not being restricted to any of the following examples. The following examples are set forth to assist in understanding the invention and should not be construed as

specifically limiting the invention described and claimed herein.

Synthesis and Analysis of base polymers A1 to A3, B1 and B2

*Materials and instruments*

Solvents N,N-dimethylacetamide (DMAc) and dimethyl sulfoxide (DMSO) were purchased from RIVA GmbH Batteries (Germany) and Carl Roth GmbH & Co. KG (Germany), respectively. Prior to its use, DMAc was dried according to a standard distillation method known in the art.

Poly(ether ether ketone) (PEEK) was purchased from Sigma-Aldrich (USA).

Poly(ether ketone) (PEK) was purchased from Axiva.

Polybenzimidazol-OO (PBI-OO) was purchased from Fumatech GmbH (Germany).

Meta-polybenzimidazole (m-PBI, **B1**) was purchased from HOS-Technik Vertriebs- und Produktions-GmbH (Austria). Prior to the use of polymer m-PBI, it was dried in vacuo for 12 hours at 110 °C.

Polymer **A1** (sPPSU, sulfonated poly(arylene ether sulfone) was prepared according to a method previously reported in D. Xing, J. Kerres Journal of New Materials for Electrochemical Systems 2006, 9, 51-60.

Polymers **A2** (sPEEK, sulfonated poly(ether ether ketone)) and **A3** (sPEK, sulfonated poly(ether ketone)) were prepared according to a method previously reported in H.-H. Ulrich, G. Rafler Die Angewandte Makromolekulare Chemie 1998, 263, 71-78.

For the GPC (gel permeation chromatography; Agilent Technologies 1200 Series GPC system, USA) measurements, a differential refractometer (Shodex RI71, Showa Denko America, Inc., USA), a viscometer (PSS ETA-2010, PSS GmbH, Germany), and a multi-angle light scattering photometer (PSS SLD 7000, PSS GmbH, Germany) were used as detectors. The stationary phase consisted of two columns of different pore sizes: PSS PFG, 5-7 μm, 300 Å, and PSS PFG 5-7 μm, 1000 Å (PSS GmbH, Germany).

The total ion exchange capacity ($IEC_{total}$) was determined by acid-base titration experiments using bromothymol blue. Prior to experiments the polymers were washed with demineralized water until complete neutralization. Subsequently, the polymers were transferred into the respective $Na^+$ form by bathing the membrane in saturated NaCl solution for 24 hours. The acidic solution was then titrated with 0.1 M NaOH solution until complete neutralization. Afterwards, a defined surplus of NaOH was added to the solution and titrated back with 0.1 M HCl until the equivalent point was reached. The $IEC_{total}$ was calculated using formula (1):

$$IEC_{total} = \frac{V_{NaOH}+V_{NaOH,sur}-V_{HCl}}{m_{dry}\cdot 10} \quad (1)$$

wherein $V_{NaOH,sur}$ = Volume of added surplus of NaOH, and

$V_{HCl}$ = Volume of HCl consumed.

The degree of sulfonation (DS) was determined in a four-step procedure. At first, the molecular weight of polymers of different degrees of sulfonation, e.g. 25, 50, 75, and 100 %, are calculated. In a subsequent step, the $IEC_{theor}$ of the polymers with above mentioned degrees of sulfonation are calculated via formula (2):

$$\boldsymbol{IEC_{theor}} = \frac{\boldsymbol{n_{SO_3H}} \times \mathbf{1000}}{\mathbf{MW_s}} \quad (2)$$

wherein $n_{SO3H}$ is the number of sulfonate groups, and

$MW_s$ is the molecular weight of sulfonated polymer.

Then, the degree of sulfonation was plotted over the calculated $IEC_{theor}$ values. The obtained data points were fitted with a polynomic function. In the third step, the degree of sulfonation is plotted over the $IEC_{theor}$ and the data points are fitted with a polynomic function. At last, the degree of sulfonation of the polymers is calculated by inserting the experimentally determined $IEC_{total}$ into said polynomic function.

*Analysis*

Each polymer product was dissolved in a solution of 5 g LiBr per 1 L of DMAc and then subjected to GPC measurement in order to perform mass analysis. In particular, the sulfonation degree (DS) was determined in order to prepare polymer blends of the acid group/base group ratio according to the present disclosure. The results of each polymer batch used in the experiments are presented in Table 1.

**Table 1** Characterization of the polymers **A1** to **A3** and **B1** used in Experiments 1 and 2, respectively.

| Polymer | Molar mass distribution | | | $IEC_{total}$ [meq/g] | DS |
|---|---|---|---|---|---|
| | Mn [g/mol\| | Mw [g/mol\| | PD | | |
| **A1*** | 25,000 | 50,000 | 1.9 | 1.8 | 42 % |
| **A2*** | 50,000 | 130,000 | 2.5 | 1.8 | 60 % |
| **A2**** | 51,000 | 141,000 | 2.7 | 1.7 | 54% |
| **A3*** | 40,000 | 100,000 | 2.7 | 1.8 | 39 % |
| **B1***** | 50,000 | 120,000 | 2.3 | 6.49 | - |
| Mn = Number average molar mass. Mw = Mass average molar mass. PD = Polydispersity index, Mw/Mn. IEC= Ion exchange capacity. DS = Degree of sulfonation. *Polymer batch used in Experiment 1. **Polymer batch used in Experiment 2. ***Polymer batch used in Experiments 1 and 2. | | | | | |

Preparation of acid-base polymer solutions

*General procedure*

Step 1: An acidic polymer **A1**, **A2** and/or **A3** was dissolved in a respective solvent (e.g., DMSO and/or DMAc) preparing a 10 wt.-% solution under stirring for nine (9) hours at room temperature. Alternatively, stirring was performed for four (4) hours at 80 °C. The stirring was performed at 500 rpm for 1 hour, then at 300 rpm for 3 hours.

Step 2: In a sealed Schott flask, a basic polymer of **B1** was dissolved in solvent DMAc preparing a 5 wt.-% solution under stirring for 12 hours at 150 °C. The stirring was performed at 700 rpm for 2 hours, then at 400 rpm for 10 hours. The dissolved basic polymer was cooled to room temperature and then filtered with a suction filter.

Step 2.1: In the case of an acid-base polymer blend combination comprising the acidic polymer **A3**, e.g. **A3-B1**, the acidic polymer solution obtained in step 1 was subjected to deprotonation by adding triethyl amine (TEA; about 0,5 mL/1 g of A3), followed by step 3.

Step 3: Both solutions obtained in steps 1 and 2, or steps 1 and 2.1 were mixed in different weight ratios 90 / 10, 93 / 7 and 96 / 4. The distinct molar ratio of acid groups A to basic groups B in said mixtures are presented in Table 2. Depending on the used acidic polymer, the mixture was stirred at room temperature at 400 rpm for different periods of time (**A1** or **A2**: three (3) hours; **A3**: 12 hours). The mixture was then filtered obtaining a homogeneous polymer solution.

**Table 2** Mixtures of **A1-B1**, **A2-B1** and **A3-B1** with different acidic polymer solution to basic polymer solution ratios obtained in step 3 of the membrane preparation.

| Weight ratio acidic polymer solution (10 wt%) / basic polymer solution (5 wt%) | Molar ratio acidic group A / basic group B |
|---|---|
| | **A1-B1**, **A2-B1** |
| 90 / 10 | 1 / 0.20 |
| 93 / 7 | 1 / 0.14 |

(continued)

| Weight ratio acidic polymer solution (10 wt%) / basic polymer solution (5 wt%) | Molar ratio acidic group A / basic group B |
|---|---|
| | **A1-B1**, **A2-B1** |
| 96 / 4 | 1 / 0.08 |

Membrane preparation

The acid-base polymer blend membrane was prepared using a membrane casting machine Elcometer 4340 using a squeegee with an adjustable gap height from 0-2000 μm both (Elcometer Instruments GmbH, Germany). Prior to usage, the glass plate of the membrane casting machine was pre-treated as described in the following. The glass plate was cleaned with a sponge and demineralized water. The surface of the cleansed glass plate was passivated using isopropyl alcohol (purity > 98 %), then dried with a cloth.

*General procedure*

The acid-base polymer solution prepared as described above was coated on the pre-treated glass plate (about 25 mL/DIN A4-sized area). The squeegee gap was set at a distance of 600 μm to the glass plate. At a processing temperature of 20 °C to 45 °C, the coating acid-base polymer solution was drawn out to a thin film using a squeegee at a speed of 20 mm/s to 60 mm/s. A spacer (with a height of about 1 to 2 cm) and then a further pre-treated glass plate was stacked on top of the coated glass plate. The resulting pile was dried at 80 °C for 12 hours, then at 130 °C for 2 hours. After bathing the coated and dried glass plate in demineralized water for 5 to 10 minutes, the membrane was separated from the glass plate. The obtained membrane was then activated in HCl (10 wt.-%) or a mixture of NaOH/KOH (1M/1M) for 24 hours at 90 °C. The activated membrane was washed with demineralized water for 5 minutes, then bathed in fresh demineralized water for 24 hours at 90 °C.

Battery performance

In order to investigate the battery performance, the specific membrane resistance (Rm), the cell resistance (Rc), the coulombic efficiency (CE) and the ion exchange capacity (IEC) were analyzed for the acid-base polymer blend membranes of the combination types **A1-B1**, **A2-B1** and **A3-B1** at 20 °C. The data of the acid-base polymer blend membranes was compared to the reference membrane Fumasep® E620PE from Fumatech. The results are presented in Table 3.

*Instruments and techniques*

**a) Specific membrane resistance (Rm)**

The measurement of the specific membrane resistance (Rm) was performed on an Autolab PGSTAT 204 potentiostat / galvanostat instrument (Metrohm, Switzerland) through a potentiostatic electrochemical impedance spectroscopy (EIS) with an amplitude of 20 mV in a frequency range of $10^5$ Hz to 1 Hz using a TSC battery test cell (RHD Instruments, Germany) with 0,5 M $H_2SO_4$ electrolyte solution. The applied test cell exhibits an active membrane surface of 38 $mm^2$. Prior to the experiment, the acid-base polymer blend membrane was bathed in a 0,5 M $H_2SO_4$ electrolyte solution for at least 12 hours.

**b) Cell resistance (Rc) and coulombic efficiency (CE)**

The measurements of the cell resistance (Rc) and the coulombic efficiency (CE) were performed on an Autolab PGSTAT 204 potentiostat / galvanostat instrument (Metrohm, Switzerland) using a redox flow battery (RFB) test cell with an all-vanadium electrolyte system (1.6 M $V^{3+}/V^{4+}$ electrolyte, GfE Metalle und Materialien GmbH, Germany). The active membrane surface in the RFB cell was 6 $cm^2$. Two thermally pre-treated SIGRACELL GFD 2,5 EA carbon-fleeces with an uncompressed thickness of 2.5 mm (SGL Carbon, Germany) served as electrodes which were placed into a flow channel. Epoxy impregnated graphite plates (Müller & Rössner, Germany) were used as current collectors.

For the battery experiments, 20 mL of the vanadium electrolyte was pumped into each half cell at a constant flow rate of 25 mL/min using a peristaltic pump (Ismatec, USA).

**Cell resistance (Rc)**

The cell resistance (Rc) was determined by means of polarization experiments. During a polarization experiment, energy was taken from the RFB by applying an electrical load at a constant current of 2.5 $mA/cm^2$ for 30 seconds. Then, the constant current was gradually increased to 65 $mA/cm^2$ with a stepsize of 2.5 $mA/cm^2$ each time holding the particular current for 30 seconds. The resulting battery voltages were simultaneously recorded. The cell resistance (Rc) was calculated from the measured gradient of the polarization curve with current and voltage plotted on the x-axis and the y-axis, respectively.

**Coulombic efficiency (CE)**

The coulombic efficiency (CE) was calculated via the charge and discharge currents recorded within the charge/discharge cycles using formula (3):

$$CE = \frac{\int_0^{t_{Discharge}} \mathrm{I}_{Discharge}(t) \times \mathrm{dt}}{\int_0^{t_{Charge}} \mathrm{I}_{Charge}(t) \times \mathrm{dt}} \quad (3)$$

During the charge / discharge cycles, the RFB was charged with a constant current of 43 $mA/cm^2$ and 65 $mA/cm^2$, respectively, and then discharged. The calculated coulombic efficiency values are each mean values of 4 charge / discharge cycles. Prior to the experiment, the acid-base polymer blend membrane was bathed in a 2.5 M $H_2SO_4$ electrolyte solution for at least 12 hours.

**c) Ion exchange capacity (IEC)**

The ion exchange capacity (IEC) was determined by acid-base titration experiments using bromothymol blue. Prior to the experiment the acid-base polymer blend membrane in the protonated form was transferred into the respective $Na^+$ form by bathing the membrane in saturated NaCl solution for 24 hours. The acidic solution was then titrated with 0.1 M NaOH solution until complete neutralization. The ion exchange capacity (IEC) was calculated using formula (4):

$$IEC = \frac{\mathrm{V}_{NaOH}}{\mathrm{m}_{dry} \cdot 10} \quad (4)$$

wherein $V_{NaoH}$ = Volume of NaOH consumed, and
$m_{dry}$ = dry weight of the protonated acid-base polymer blend membrane.

*Comparative Example: Battery performance of Fumasep® E620PE membrane*

The battery performances of the acid-base polymer blend membranes according to the present disclosure were compared to the prior art reference membrane Fumasep® E620PE. Data on the reference membrane are presented in Table 3.

**Table 3** Battery performance of Fumasep® E620PE reference membrane.

| | | Fumasep® E620PE reference |
|---|---|---|
| Rm[1] [Ohm x cm] | | 137.7 |
| Rc[2] [Ohm x $cm^2$] | | 4.2 |
| CE[2] [%] at | 43mA/$cm^2$<br>65mA/$cm^2$ | 97.5<br>98.7 |
| IEC [mmol/g] | | 0.95 |
| [1] 0.5 M $H_2SO_4$ electrolyte. [2] 4 M $H_2SO_4$ and 1.6 M vanadium electrolyte. | | |

*Example 1: Battery performance of acid-base ion exchange polymer blend membranes **A1-B1**, **A2-B1** and **A3-B1** with an A / B molar ratio of 1 / 0.2*

The battery performances of the acid-base polymer blend membranes according to the present disclosure were compared to the prior art reference membrane Fumasep® E620PE. Data on the reference membrane are presented in Table 3.

In order to investigate the battery performance, the specific membrane resistance (Rm), the cell resistance (Rc), the coulombic efficiency (CE) and the ion exchange capacity (IEC) were analysed for the acid-base polymer blend membranes of the combination types **A1-B1, A2-B1** and **A3-B1** at 20°C. The data of the acid-base polymer blend membranes was compared to the prior art reference membrane Fumasep® E620PE. The results are presented in Table 4.

The results show that each one of the ion exchange membranes according to the present disclosure exhibit, in particular, more favourable membrane resistance, cell resistance and ion exchange capacity than the reference membrane (see Table 3). Notably, the acid-base polymer blend membranes **A1-B1, A2-B1** and **A3-B1** exhibit at least half the membrane resistance Rm as the reference membrane. The Rm value of **A2 B1** stands out with an Rm of 45,4 Ω*cm.

**Table 4** Battery performances of acid-base polymer blend membranes of the different polymer combinations **A1-B1**, **A2-B1**, and **A3-B1**, respectively with an A / B molar ratio of 1 / 0.2. The membranes were prepared using a squeegee height of 600 μm, a speed of squeegee of 30 mm/s. Processing temperature of 20 °C.

| | | A1-B1 | A2-B1 | A3-B1 |
|---|---|---|---|---|
| Rm[1] [Ohm x cm] | | 57.2 | 45.4 | 54.7 |
| Rc[2] [Ohm x $cm^2$] | | 3.5 | 3.9 | 3.9 |
| CE[2] [%] at | 43 mA/$cm^2$<br>65 mA/$cm^2$ | 97.6<br>- | -<br>96.3 | -<br>96.1 |
| IEC [mmol/g] | | 1.04 | 1.06 | 0.91 |
| [1] 0.5 M $H_2SO_4$ electrolyte. [2] 4 M $H_2SO_4$ and 1.6 M vanadium electrolyte. | | | | |

*Example 2: Effect of different processing temperatures and speed of squeegee on the membrane resistance*

The effect of different processing temperatures and speed of squeegee, respectively, during the preparation of membrane **A2-B1** was investigated with regard to the membrane resistance Rm (Table 5).

The results presented show that the membrane resistance strongly depends on the method the ion exchange membrane was prepared. Herein, it is described two parameters during the membrane preparation, namely the processing temperature and the speed of squeegee which determine the membrane resistance.

Investigations show that the Rm value decreases when increasing the processing temperature during the membrane preparation. For example, the membrane resistance of **A2-B1** with the A / B molar ratio of 1 / 0.2 decreases from 90.03 Ω*cm to 44.39 Ω*cm when increasing the processing temperature from 20 °C to 45 °C. A similar trend is observed for the other two A / B molar ratios. Notably, the extent of the decrease in Rm attenuates at higher A / B molar ratios, i.e. when the acidic proportion of the polymer blend increases.

Furthermore, the Rm value depends on the speed of squeegee during the membrane preparation. Overall a trend is observed, wherein the membrane resistance increases at higher speeds of squeegee. For example, the Rm value of the **A2-B1** membrane with an A / B molar ratio of 1 / 0.14 is 1.5 times higher when increasing the speed of squeegee from 40 mm/s to 60 mm/s (from 33.53 Ω*cm to 54.36 Ω*cm). Again, similarly to the effect observed for the processing temperature, this trend smoothens at increasing A / B molar ratios. At an A / B molar ratio of 1 / 0.08, for example, the speed of squeegee has no considerable effect on the membrane resistance. To the contrary, a slight decrease of the Rm value is observed when increasing the speed of squeegee from 20 mm/s to 60 mm/s (from 22.05 Ω*cm to 21.28 Ω*cm).

**Table 5** Effect of different processing temperature and speed of squeegee on the membrane resistance of acid-base polymer blend membrane **A2-B1** with different A / B molar ratios 1 / 0.20, 1 / 0.14, and 1 / 0.08, respectively. The membranes were prepared using a squeegee height of 600 μm.

| A / B molar ratio | Processing temperature [°C] | Speed of squeegee [mm/s] | Rm [Ω*cm] |
|---|---|---|---|
| 1 / 0.20 | 20 | 40 | 90.03 |
| | 45 | 40 | 44.39 |
| | 45 | 20 | 38.67 |
| 1 / 0.14 | 20 | 60 | 54.36 |
| | 45 | 60 | 22.88 |
| | 20 | 40 | 33.53 |
| 1 / 0.08 | 20 | 60 | 33.61 |
| | 45 | 60 | 21.28 |
| | 45 | 20 | 22.05 |

**Claims**

1. An acid-base polymer blend membrane comprising at least one first polymer exhibiting acidic groups (A) and at least one second polymer exhibiting basic groups (B), wherein the molar ratio of acidic groups A / basic groups B in the acid-base polymer blend membrane is at least 1 / 0.25.

2. The acid-base polymer blend membrane according to claim 1, wherein the acidic group of the first polymer is selected from the group consisting of $-SO_3H$, $-PO_3H$, $-PO_3H_2$, -COOH, $-AsO_3H$, $-SeO_3H$ and/or $-C_6H_4OH$, preferably wherein the acidic group is $-SO_3H$.

3. The acid-base polymer blend membrane according to any one of claims 1 to 2, wherein the basic group of the second polymer is selected from the group consisting of pyridine, triazole, benzotriazole, pyrazol, benzpyrazol, imidazole, and benzimidazole, preferably wherein the basic group is imidazole or benzimidazole, further preferably benzimidazole.

4. The acid-base polymer blend membrane according to any one of claims 1 to 3, wherein the at least one first polymer is selected from the group consisting of sulfonated poly(arylene ether sulfone) (sPAES), sulfonated poly(ether ether ketone) (sPEEK), and sulfonated poly (ether ketone) (sPEK),
preferably wherein the at least one first polymer is selected from the group consisting of sulfonated polyphenylsulfone (sPPSU), sulfonated poly(ether ether ketone) (sPEEK), and sulfonated poly (ether ketone) (sPEK), and
further preferably wherein the at least one first polymer is sulfonated poly(ether ether ketone) (sPEEK).

5. The acid-base polymer blend membrane according to claims any one of claims 1 to 4, wherein the at least one second polymer is selected from the group consisting of meta-polybenzimidazole (m-PBI), and polybenzimidazole-OO (PBI-OO), and preferably wherein the at least one second polymer is meta-polybenzimidazole (m-PBI).

6. The acid-base polymer blend membrane according to any one of claims 1 to 5, wherein the molar ratio of acidic groups A / basic groups B in the acid-base polymer blend membrane is
at least 1 / 0.24, or at least 1 / 0.23, or at least 1 / 0.22, or at least 1 / 0.21, or at least 1 / 0.20, or at least 1 / 0,19, or at least 1 / 0.18, or at least 1 / 0.17, or at least 1 / 0.16, or at least 1 / 0.15, or at least 1 / 0.14, or at least 1 / 0.13, or at least 1 / 0.12, or at least 1 / 0.11, or at least 1 / 0.10, or at least 1 / 0.09;
preferably wherein the molar ratio is
at least 1 / 0.21, or at least 1 / 0.20, or at least 1 / 0.15, or at least 1 / 0.14, or at least 1 / 0.10, or at least 1 / 0.09.

7. The acid-base polymer blend membrane according to any one of claims 1 to 6, wherein the molar ratio of acidic groups A / basic groups B in the acid-base polymer blend membrane is
1 / 0.07 or less, or 1 / 0.08 or less, or 1 / 0.09 or less, or 1 / 0.10 or less, or 1 / 0.11 or less, or 1 / 0.12 or less, or 1 / 0.13 or less, or 1 / 0.14 or less, or 1 / 0.15 or less, or 1 / 0.16 or less, or 1 / 0.17 or less, or 1 / 0.18 or less, or 1 /

0.19 or less, or 1 / 0.20 or less, or 1 / 0.21 or less, or 1 / 0.22 or less, or 1 / 0.23 or less;
preferably wherein the molar ratio is
1 / 0.07 or less, or 1 / 0.08 or less, or 1 / 0.12 or less, 1 / 0.13 or less, or 1 / 0.18 or less, or 1 / 0.19 or less.

**8.** The acid-base polymer blend membrane according to any one of claims 1 to 7, wherein the molar ratio of acidic groups A / basic groups B in the membrane is in the range of from 1 / 0.25 to 1 / 0.07, or from 1 / 0.20 to 1 / 0.08, or from 1 / 0.20 to 1 / 0.13, or from 1 / 0.20 to 1 / 0.19, or from 1 / 0.14 to 1 / 0.08, or from 1 / 0.14 to 1 / 0.13, or from 1 / 0.09 to 1 / 0.08.

**9.** Cell membrane comprising a support structure and an acid-base polymer blend membrane according to any one of claims 1 to 8, wherein the acid-base polymer blend membrane is impregnated on the support structure.

**10.** Cell membrane according to claim 9, wherein the support structure is a woven or nonwoven fabric, preferably wherein the fabric comprises a polymer selected from the group consisting of polyethylene (PE), polypropylene (PP), polyamide (PA), polysulfone (PSU), polyether ether ketone (PEEK), polyether ketone (PEK), polyvinylidene fluoride (PVDF), polyethersulfone (PES), polyetherimide (PEI), polybenzimidazole (PBI), polyethylene terephthalate (PET), polyester and polyphenylene oxide (PPO); or wherein the fabric is comprises glass fibers
further preferably wherein the fabric comprises a polymer selected from the group consisting of polyethylene (PE), polypropylene (PP), polyamide (PA), polysulfone (PSU), polyether ether ketone (PEEK), polyether ketone (PEK), polyethylene terephthalate (PET), and polyester,
or wherein the fabric comprises a polymer selected from the group consisting of polyethylene (PE), polypropylene (PP), and polyester.

**11.** Cell membrane according to any one of claims 9 to 10, wherein the support structure, preferably the nonwoven fabric, has a thickness in the range of from 1 to 250 μm, preferably of from 1 to 200 μm, or from 2 to 200 μm, or from 5 to 100 μm, or from 10 to 200 μm, or from 50 to 100 μm, or from 5 to 50 μm, or from 20 to 50 μm, or preferably in the range of from 1 to 60 μm, or from 10 to 50 μm, or from 1 to 25 μm, or from 2 to 20 μm.

**12.** Cell membrane according to any one of claims 9 to 11, wherein the support structure is impregnated with the acid-base polymer blend membrane on one side of the support structure, or wherein the entire support structure is impregnated with the acid-base polymer blend membrane.

**13.** Cell membrane according to claim 12, wherein the support structure is impregnated with the acid-base polymer blend membrane, and wherein the impregnated support structure has a thickness in the range of from 1 μm to 400 μm, preferably of from 10 to 100 μm, or from 50 to 100 μm, or from 20 to 50 μm.

**14.** Use of the acid-base polymer blend membrane according to any one of claims 1 to 8, or of the cell membrane according to any one of claims 9 to 13 in an electrodialysis cell, in a fuel cell, in a PEM electrolyzer, or in a redox flow battery, preferably in a redox flow battery.

**15.** Device comprising an acid-base polymer blend membrane according to any one of claims 1 to 8, or a cell membrane according to any one of claims 9 to 13, wherein the device is an electrodialysis cell, a fuel cell, a PEM electrolyzer, or a redox flow battery, preferably a redox flow battery.

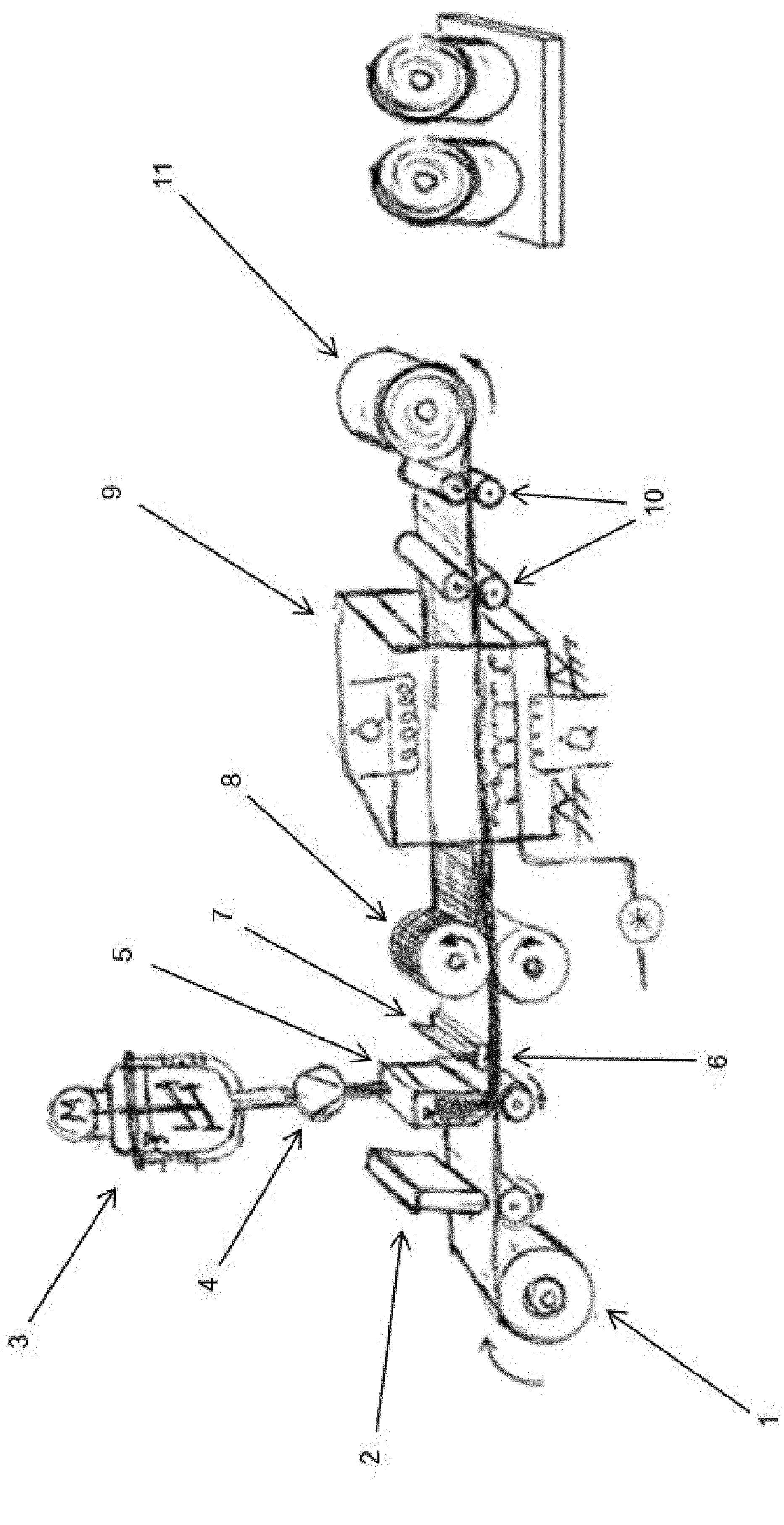


Fig. 1

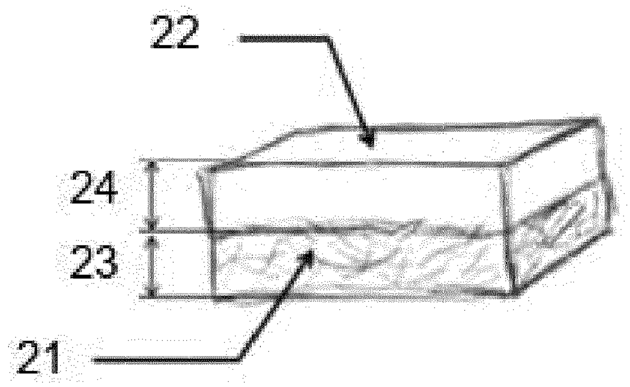


Fig. 2

Europäisches Patentamt
European Patent Office
Office européen des brevets

# EUROPEAN SEARCH REPORT

Application Number
EP 20 20 5083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/091762 A1 (SOCZKA-GUTH THOMAS [DE] ET AL) 13 May 2004 (2004-05-13)<br>* paragraph [0001]; claim all *<br>----- | 1-15 | INV.<br>H01M8/1044<br>H01M8/1025<br>B01D61/00<br>C25C7/04<br>H01M8/1027<br>H01M8/103<br>H01M8/106<br>H01M8/1062<br>H01M8/18 |
| X | DEIMEDE V. ET AL: "Miscibility Behavior of Polybenzimidazole/Sulfonated Polysulfone Blends for Use in Fuel Cell Applications",<br>MACROMOLECULES,<br>vol. 33, no. 20,<br>1 October 2000 (2000-10-01), pages 7609-7617, XP055795420,<br>Washington DC United States<br>ISSN: 0024-9297, DOI: 10.1021/ma000165s<br>* page 7610; table 1 *<br>----- | 1-15 | |
| X<br><br>A | WO 2015/119272 A1 (TOYO BOSEKI [JP])<br>13 August 2015 (2015-08-13)<br>* claim all *<br>----- | 1-3,5-15<br><br>4 | |
| A | JIANG BOWEN ET AL: "A new long-side-chain sulfonated poly(2,6-dimethyl-1,4-phenylene oxide) (PPO) /polybenzimidazole (PBI) amphoteric membrane for vanadium redox flow battery",<br>CHINESE JOURNAL OF CHEMICAL ENGINEERING, CHEMICAL INDUSTRY PRESS, BEIJING, CN,<br>vol. 28, no. 7, 21 March 2020 (2020-03-21), pages 1918-1924, XP086245558,<br>ISSN: 1004-9541, DOI: 10.1016/J.CJCHE.2020.03.010<br>[retrieved on 2020-03-21]<br>* the whole document *<br>----- | 1-15 | TECHNICAL FIELDS SEARCHED (IPC)<br>H01M<br>C25C<br>B01D |

The present search report has been drawn up for all claims

1

| Place of search | Date of completion of the search | Examiner |
|---|---|---|
| Munich | 15 April 2021 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 20 5083

This annex lists the patent family members relating to the patent documents cited in the above-mentioned European search report. The members are as contained in the European Patent Office EDP file on The European Patent Office is in no way liable for these particulars which are merely given for the purpose of information.

15-04-2021

| Patent document cited in search report | Publication date | Patent family member(s) | Publication date |
|---|---|---|---|
| US 2004091762 A1 | 13-05-2004 | AT 412461 T | 15-11-2008 |
| | | BR 9915177 A | 30-10-2001 |
| | | CA 2350205 A1 | 18-05-2000 |
| | | CN 1330566 A | 09-01-2002 |
| | | DE 19851498 A1 | 06-07-2000 |
| | | DK 1144100 T3 | 23-02-2009 |
| | | EP 1144100 A2 | 17-10-2001 |
| | | EP 2014349 A1 | 14-01-2009 |
| | | ES 2313796 T3 | 01-03-2009 |
| | | JP 2002529546 A | 10-09-2002 |
| | | KR 20010080963 A | 25-08-2001 |
| | | RU 2224583 C2 | 27-02-2004 |
| | | US 6632847 B1 | 14-10-2003 |
| | | US 2004091762 A1 | 13-05-2004 |
| | | WO 0027513 A2 | 18-05-2000 |
| WO 2015119272 A1 | 13-08-2015 | JP 6447520 B2 | 09-01-2019 |
| | | JP WO2015119272 A1 | 30-03-2017 |
| | | WO 2015119272 A1 | 13-08-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **D. XING ; J. KERRES.** *Journal of New Materials for Electrochemical Systems,* 2006, vol. 9, 51-60
- **H.-H. ULRICH ; G. RAFLER.** *Die Angewandte Makromolekulare Chemie,* 1998, vol. 263, 71-78